# EUROPÄISCHE PATENTSCHRIFT

(11) **EP 1 907 146 B1**
(45) Veröffentlichungstag und Bekanntmachung des Hinweises auf die Patenterteilung: **20.07.2011**
(21) Anmeldenummer: 05750518.2
(22) Anmeldetag: 28.05.2005
(51) Int. Cl.: B21C 1/30, B21C 3/16, H02K 41/025

(54) **VORRICHTUNG ZUM UMFORMEN VON ROHRFÖRMIGEN ELEKTRISCH LEITENDEN UND/ODER MAGNETISIERBAREN GÜTERN MIT EINEM MITTEL ZUM LEITEN EINES ELEKTRISCHEN FLUSSES**
DEVICE FOR FORMING TUBULAR ELECTROCONDUCTIVE AND/OR MAGNETISABLE GOODS, COMPRISING A MEANS FOR CONDUCTING AN ELECTRIC CURRENT
DISPOSITIF DE FORMAGE D'ARTICLES TUBULAIRES ELECTROCONDUCTEURS ET / OU POUVANT ETRE MAGNETISES, POURVU D'UN MOYEN DE CONDUCTION DE FLUX ELECTRIQUE

(43) Veröffentlichungstag der Anmeldung: 09.04.2008
(73) Patentinhaber: BL Chemie GmbH & Co. KG, 58809 Neuenrade (DE)
(72) Erfinder: WITTE, Werner, 59425 Unna (DE); OSWALD, Bernhard, 63893 Miltenberg (DE); BILSTEIN, Peter, 58708 Menden (DE); ILLGEN, Lothar, 58640 Iserlohn (DE)
(74) Vertreter: Graefe, Jörg
(86) Internationale Anmeldenummer: PCT/EP2005/005743
(87) Internationale Veröffentlichungsnummer: WO 2006/128476

(56) Entgegenhaltungen:
- WO-A-03/051551
- WO-A-2004/039513
- DE-C- 943 044
- US-A- 3 602 745
- US-A- 3 911 706
- US-A- 4 712 027
- DI DIO V ET AL INSTITUTE OF ELECTRICAL AND ELECTRONICS ENGINEERS: "STATE OF ART OF TUBULAR LINEAR INDUCTION MOTOR" MELECON '96. 8TH. MEDITERRANEAN ELECTROTECHNICAL CONFERENCE. INDUSTRIAL APPLICATIONS IN POWER SYSTEMS, COMPUTER SCIENCE AND TELECOMMUNICATIONS. BARI, IT., MAY 13 - 16, 1996, MELECON. MEDITERRANEAN ELECTROTECHNICAL CONFERENCE, NEW YORK, IEEE, US, Bd. VOL. I CONF. 8, 13. Mai 1996 (1996-05-13), Seiten 285-288, XP000696242 ISBN: 0-7803-3110-9
- PATENT ABSTRACTS OF JAPAN Bd. 010, Nr. 075 (E-390), 25. März 1986 (1986-03-25) & JP 60 219958 A (HITACHI SEISAKUSHO KK), 2. November 1985 (1985-11-02)

## Beschreibung

Die Erfindung betrifft eine Vorrichtung zum Umformen von rohrförmigen elektrisch leitenden und/oder magnetisierbaren Gütern, insbesondere zum Durchziehen oder Durchdrücken.

Aus der als nächstliegender Stand der Technik angesehenen Druckchrift mit der Veröffentlichungsnummer US 3,911,706 ist eine derartige Vorrichtung zum Umformen von rohrförmig elektrisch leitenden und/oder magnetisierbaren Gütern bekannt. Die Vorrichtung weist einen Induktor eines elektrischen Linearmotors auf, der geeignet ist, elektromagnetische Wanderfelder zu erzeugen. Der Induktor umfasst axial nebeneinander angeordnete Spulen, die einen Kanal ausbilden. Die Vorrichtung umfasst ferner ein starres Mittel zum Leiten eines magnetischen Flusses, das in dem Kanal herausnehmbar angeordnet ist und starr mit einem Ziehdorn der Vorrichtung verbunden ist.

Die starre Verbindung des Mittels zum Leiten des magnetischen Flusses mit dem Ziehdorn und die starre Ausbildung des Mittels zum Leiten des magnetischen Flusses hat zumindest zwei Nachteile.

Zum einen ist es umständlich, dass Mittel zum Leiten des magnetischen Flusses zum Beginn des Ziehvorganges in das rohrförmige, umzuformende Gut einzubringen. Dazu muss im Bereich der Vorrichtung ausreichend Platz vorgehalten werden, welcher das Einführen des Mittels zum Leiten des magnetischen Flusses in das umzuformende Gut möglich macht.

Zum anderen ist nicht immer gewährleistet, dass das umzuformende Gut völlig gerade ausgerichtet ist. Es kann vielmehr vorkommen, dass das umzuformende Gut gebogen ist. Sofern jedoch das Mittel zum Leiten des magnetischen Flusses gerade ausgerichtet ist, kann dieses zu Beginn des Ziehvorgangs nicht ohne weiteres in das rohrförmige umzuformende Gut eingeführt werden. Vielmehr ist vor dem Einführen dann ein Richten des umzuformenden Guts notwendig.

Hier setzt die vorliegende Erfindung an.

Der vorliegenden Erfindung liegt die Aufgabe zugrunde, eine Vorrichtung der eingangs genannten Art so zu verbessern, dass die Handhabung mit dem Mittel zum Leiten des elektrischen Flusses einfacher ist und ein Richten des umzuformenden Guts vor dem Einführen des Mittels zum Leiten des magnetischen Flusses überflüssig wird.

Diese Aufgabe wird erfindungsgemäß dadurch gelöst, dass das Mittel zum Leiten des magnetischen Flusses mehrere hintereinander angeordnete Elemente umfasst. Diese Elemente des Mittels zum Leiten des magnetischen Flusses können vorzugsweise über flexible Verbindungselemente miteinander verbunden sein. Ebenso ist es möglich, dass die Elemente lösbar miteinander verbunden sind.

Ein so ausgebildetes Mittel zum Leiten des magnetischen Flusses bringt die Lösung für die der Erfindung zugrunde liegenden Probleme. Die einzelnen Elemente des Mittels zum Leiten des magnetischen Flusses können nacheinander in das rohrförmige Gut eingebracht werden, ohne dass besondere Erfordernisse an den Platz im Bereich der Vorrichtung vorgesehen seien müssen. Ebenso ist ein Richten der rohrförmigen Güter vor dem Einführen des Mittels zum Leiten des magnetischen Flusses beziehungsweise der Elemente dieses Mittels nicht notwendig, da die Elemente untereinander nicht starr miteinander verbunden sind.

Gemäß der Erfindung können die Induktoren der erfindungsgemäßen Vorrichtung aus einem oder mehreren Modulen aufgebaut sein, die im Grunde genommen für sich eigenständige Induktoren bilden. Jedes dieser Module ist zumindest aus zwei Spulenpaketen zusammengesetzt, die so angesteuert werden, dass sie ein elektromagnetisches Wanderfeld aufbauen können.

Die Elemente der Mittel zum Leiten des magnetischen Flusses können eine Länge haben, die der Länge eines Spulenpakets entspricht. Die Elemente können jedoch auch eine beliebige andere Länge haben. Vorzugsweise sind die Elemente in Gruppen angeordnet, wobei jede dieser Gruppen einem Modul eines der Induktoren zugeordnet ist. Beispielsweise kann jedes Modul drei Spulenpakete aufweisen, wobei jedem Spulenpaket ein Element eines Mittels zum Leiten des magnetischen Flusses zugeordnet ist, so dass jedes einem Modul zugeordnete Mittel zum Leiten des magnetischen Flusses drei Elemente aufweist.

Die Elemente eines Mittels zum Leiten des magnetischen Flusses können aus verfestigtem Pulvermetall hergestellt sein. Ebenso ist es möglich, dass andere Materialien verwendet werden. Die verwendeten Materialien müssen jedoch elektrisch leitend und/oder magnetisierbar sein.

Statt verfestigtem Pulvermetall kann auch Pulvermetall verwendet werden, das lose in eine Hülle gefüllt ist. Die Hülle kann flexibel sein, zum Beispiel ein Beutel.

Die Mittel zum Leiten des magnetischen Flusses können über ein zweites flexibles Verbindungsmittel mit dem Ziehdorn der erfindungsgemäßen Vorrichtung verbunden sein. Eine solche Anbindung eines Mittels zum Leiten des magnetischen Flusses ist jedoch insbesondere auch möglich, wenn ein in sich starres Mittel zum Leiten des magnetischen Flusses verwendet wird. Eine flexible Verbindung zum Beispiel über ein Seil zwischen dem Mittel zum Leiten des magnetischen Flusses und dem Ziehdorn ist also auch dann möglich, wenn das Mittel zum Leiten des magnetischen Flusses nach der aus der Druckschrift US 3,911,706 bekannten Art ausgebildet ist.

Auch die ersten Verbindungsmittel, welche die Elemente eines oder mehrer Mittel zum Leiten des magnetischen Flusses untereinander verbinden, können Seile, insbesondere Stahlseile sein.

Zum Schmieren und Kühlen des rohrförmigen Guts während des Umformvorgangs und auch zum Kühlen der Umformwerkzeuge, d. h. des Ziehdorns und einer Ziehmatrize, sowie der Mittel zum Leiten des magnetischen Flusses wird eine Flüssigkeit vorzugsweise ein Öl in das rohrförmige umzuformende Gut gepumpt. Neben der Kühlung der benannten Teile bewirkt diese Flüssigkeit auch eine hydrodynamische Schmierung an den Umformwerkzeugen. Damit die Flüssigkeit innerhalb des rohrförmigen umzuformenden Guts zirkulieren kann, sind vorzugsweise in der Oberfläche der Mittel zum Leiten des magnetischen Flusses Strukturen vorgesehen. Bei diesen Strukturen in der Oberfläche der Mittel zum Leiten des magnetischen Flusses kann es sich um Nuten handeln, die in Längsrichtung des beziehungsweise der Mittel verlaufen.

Die Flüssigkeit sammelt sich auch in einem Bereich zwischen den Elementen des Mittels zum Leiten des magnetischen Flusses, zwischen den Elementen und dem Ziehdorn und in Spalten zwischen den Elementen und einer innern Wandung des rohrförmigen Guts. Die Relativbewegung des Guts zu den Elementen hat dabei eine Pumpwirkung zur Folge, die einen Druckaufbau zwischen den Elementen und zwischen den Elementen und dem Ziehdorn bewirkt. Dieser Druck hat eine Kraft der Elemente vom Ziehdorn weg zur folge, die durch eine Anbindung der Elemente an den Ziehdorn kompensiert wird.

Eine weitere Verbesserung der Leistung und insbesondere eine Vergrößerung der Zug- beziehungsweise Druckkräfte, die durch die Induktoren einer Vorrichtung zum Umformen aufgebracht werden können, kann erreicht werden, wenn die Leiter, welche die Spulen der Spulenpakete bilden als Hohlleiter ausgeführt sind und durch diese Hohlleiter eine Kühlflüssigkeit geleitet wird, die die Hohlleiter auf einer gewünschten Temperatur hält oder aber auf eine gewünschte Temperatur herabkühlt. Durch die Kühlung der Leiter kann eine höhere Stromdichte in den Spulen erreicht werden. Die höhere Stromdichte hat stärkere elektromagnetische Felder zur Folge, wodurch stärkere Zug- beziehungsweise Druckkräfte zur Verfügung gestellt werden können. Eine erfindungsgemäße Vorrichtung kann zum Kühlen ein Kühlaggregat umfassen, welches das Kühlmittel auf Raumtemperatur oder um 150 K abkühlt.

Die erfindungsgemäße Vorrichtung aber auch eine andere Linearziehmaschine kann um einen Wickler erweitert werden, die hinter dem Ziehantrieb angeordnet ist und mit welcher das umgeformte Gut aufgewickelt wird. Im Grunde genommen erreicht man mit einer solchen Anordnung das gleiche wie mit einer Trommelziehmaschine, bei welcher der Ziehantrieb durch den Antrieb der Trommel bereitgestellt wird. Eine solche Trommelziehmaschine hat jedoch beispielsweise bei auf Stoß miteinander verschweißten Rohren, die gezogen werden sollen, den Nachteil, dass aufgrund der hohen Zieh- und Biegekräfte, die an der Stelle des Rohrs auftreten, wo das Rohr erstmals gebogen wird, um es auf die Trommel zu wickeln, die Verbindung zwischen den auf Stoß verbundenen Rohren oftmals bricht. Durch die Entlastung dieser Stelle von den hohen Ziehkräften, was dadurch möglich ist, dass der das Ziehgut aufwickelnde Wickler hinter dem Ziehantrieb angeordnet ist und nicht den Ziehantrieb selbst bereitstellt, können derartige auf Stoß miteinander verschweißte Ziehgüter besser und schneller gezogen und größere Rohrlängen erzielt werden.

Ein Ausführungsbeispiel für eine erfindungsgemäße Vorrichtung zum Umformen von rohrförmigen elektrisch leitenden und/oder magnetisierbaren Gütern, insbesondere zum Durchziehen oder Durchdrücken ist in den Zeichnungen näher dargestellt. Es zeigt
- Fig. 1: eine schematische Darstellung der Vorrichtung im Längsschnitt und
- Fig. 2: ein Detail aus Fig. 1.

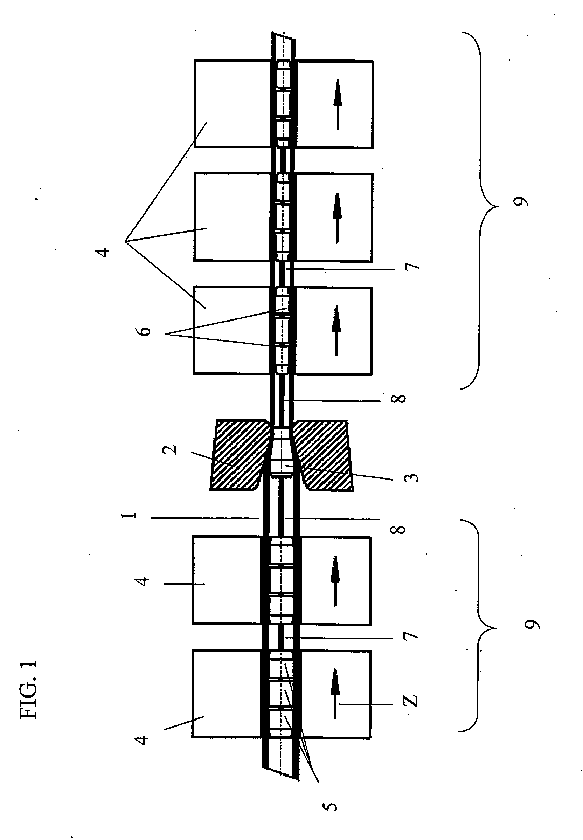

Die erfindungsgemäße Vorrichtung wie sie z. B. in den Figuren dargestellt ist, weist zwei Induktoren 9 auf, die aus Modulen 4 zusammengesetzt sind. Jedes der Module 4 umfasst mehrere Spulenpakete, wobei die Spulenpakete (nicht dargestellt) eines Moduls 4 ein elektromagnetisches Wanderfeld erzeugen. Die Spulen bilden mit ihrem freien Innenraum einen Kanal aus, in welchen das rohrförmige umzuformende Gut 1 eingeführt ist. Das rohrförmige Gut 1 wird in das elektromagnetische Wanderfeld gebracht, welches durch die Spulenpakete der Module 4 erzeugt wird. Das elektromagnetische Wanderfeld ruft innerhalb des rohrförmigen Guts 1 die Induktion eines elektromagnetischen Felds hervor, welches dem Wanderfeld entgegenwirkt und zu einer Bewegung des Guts 1 in die Richtung des Wanderfelds führt, die in der Fig. 1 mit dem Pfeil Z bezeichnet ist. Derartige Vorrichtungen sind beispielsweise in ähnlicher Form aus der Druckschrift US 3,911,706 bekannt.

Die Induktoren 9 bilden somit Linearantriebe der erfindungsgemäßen Vorrichtung zum Umformen. Der Umformvorgang selbst wird durch Werkzeuge 2, 3 bewirkt. Es handelt sich dabei zum einen um eine Ziehmatrize 2 und zum anderen einen Ziehdorn 3 wie sie auch von anderen Linearziehmaschinen zum Ziehen von rohrförmigen Ziehgütern bekannt sind.

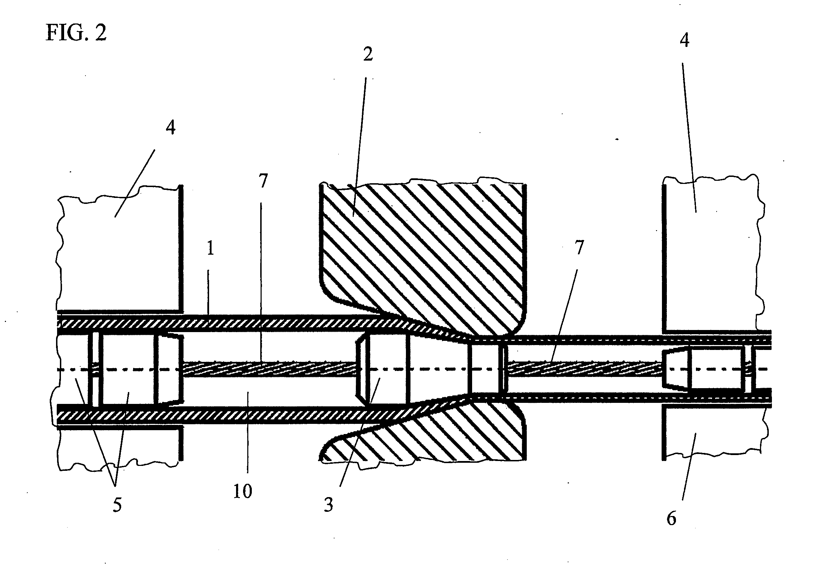

Innerhalb des rohrförmigen Guts 1 ist im Bereich der Module 4 der Induktoren 9 jeweils ein Mittel 5, 6, 7, 8 zum Leiten eines magnetischen Flusses angeordnet. Dieses Mittel 5, 6, 7, 8 umfasst jeweils mehrere Elemente 5, 6 mit einem im Wesentlichen zylindrischen Querschnitt. Diese Elemente sind aus einem magnetisch leitenden Material zum Beispiel einem verfestigten Pulvermetall hergestellt. Bei der in der schematischen Darstellung der Fig. 1 und 2 dargestellten erfindungsgemäßen Vorrichtung sind jeweils drei Elemente 5 beziehungsweise 6 einem Modul 4 zugeordnet. Die Elemente 5 beziehungsweise 6 der Mittel 5, 6, 7, 8 zum Leiten des elektrischen Flusses sind untereinander über erste flexible Verbindungsmittel 7 miteinander verbunden. Bei diesen flexiblen Verbindungsmitteln 7, die auch die Mittel 5, 6, 7, 8 zum Leiten des magnetischen Flusses untereinander verbinden, handelt es sich um Seile, vorzugsweise um Stahlseile.

Über jeweils ein zweites Verbindungsmittel 8 sind die dem Ziehdorn 3 nächst gelegenen ersten Elemente 5 beziehungsweise 6 mit dem Ziehdorn 3 verbunden. Auch bei diesen zweiten flexiblen Verbindungsmitteln 8 handelt es sich um Seile, vorzugsweise um Stahlseile.

Durch die in der Fig. 1 und 2 dargestellte Vorrichtung wird der Durchmesser des rohrförmigen Gutes 1 verjüngt. Die vor der Ziehmatrize 2 und dem Ziehdorn 3 angeordneten Module 4 des Induktors 9 drücken dabei das rohrförmige Gut mit dem zunächst noch größeren Durchmesser durch die Werkzeuge 2, 3. Die in der Richtung Z hinter den Werkzeugen 2 und 3 angeordneten Module 4 des Induktors 9 bewirken ein Ziehen des durch die Werkzeuge 2, 3 verjüngten rohrförmigen Guts. Die Geschwindigkeit des Guts 1 auf der Seite hinter den Werkzeugen 2, 3 ist dabei größer als die Geschwindigkeit vor den Werkzeugen. Die Spulenpakete (nicht dargestellt) der Module 4 des Induktors 9 hinter den Werkzeugen bilden einen Kanal aus, der einen geringeren Durchmesser hat als der entsprechende Kanal, der durch die Spulenpakete der Module 4 des Induktors 9 vor den Werkzeugen 2, 3 ausgebildet wird. Dieses ist möglich, da das rohrförmige Gut 1 nach dem Verlassen der Werkzeuge 2, 3 einen geringeren Durchmesser hat. Ebenso haben die Elemente 6 der Mittel zum Leiten des magnetischen Flusses, die in dem rohrförmigen Ziehgut hinter den Ziehwerkzeugen 2, 3 angeordnet sind, einen geringeren Außendurchmesser als die entsprechenden Elemente 6 der Mittel 6, 7, 8 zum Leiten des magnetischen Flusses vor den Werkzeugen 2, 3.

Die Mittel zum Leiten des magnetischen Flusses werden durch die flexiblen Verbindungsmittel 7, 8 in ihren Positionen gehalten. Außerdem bewirken die elektromagnetischen Felder innerhalb der Module 4 eine Stabilisierung der Position der Mittel 5, 6, 7, 8 zum Leiten des magnetischen Flusses.

Während es für die hinter den Werkzeugen 2, 3 angeordneten Mittel 6, 7, 8 zum Leiten des magnetischen Flusses logisch erscheint, dass diese durch flexible Verbindungsmittel 7, 8 wie Stahlseile gehalten werden können, erscheint dies für die Mittel 5, 7, 8 vor den Werkzeugen 2, 3 zunächst widersinnig. Aber auch vor den Werkzeugen 2, 3 ist eine Stabilisierung der Position durch Stahlseile möglich. In den Bereich zwischen den einzelnen Elementen 5, zwischen den Elementen und dem Gut 1 wird nämlich eine Flüssigkeit, vorzugsweise ein Öl zum Kühlen und zum Schmieren der Werkzeuge eingebracht. Diese Flüssigkeit sammelt sich auch in einem Spalt zwischen der inneren Wandung des rohrförmigen Guts 1 und der Außenfläche der Elemente 5 des Mittels zum Leiten des magnetischen Flusses. Die Relativbewegung zwischen den Elementen 5 und dem rohrförmigen Gut 1 hat eine Pumpwirkung zur Folge.

In dem Bereich vor den Werkzeugen 2, 3 wird durch die stetige Pumpwirkung ein Druck insbesondere im Bereich unmittelbar vor den Werkzeugen im Raum 10 erzeugt. Dieser Druck bewirkt, dass die Elemente 5 der verschiedenen vor den Werkzeugen 2, 3 angeordneten Mittel 5, 7, 8 zum Leiten des magnetischen Flusses entgegen der Richtung Z gedrückt werden. Damit die einzelnen Elemente 5 jedoch nicht entgegen der Richtung Z aus dem rohrförmigen Gut 1 herausgedrückt werden, sind diese mit den flexiblen Verbindungsmitteln 7, 8 gesichert. Der vor den Werkzeugen 2, 3 innerhalb des rohrförmigen Guts 1 herrschende Flüssigkeitsdruck macht es somit möglich, dass anstelle einer starren Verbindung der Elemente untereinander beziehungsweise des dem Ziehdorn 3 benachbarten Element 5 mit dem Ziehdorn 3 eine flexible Verbindung gewählt wird.

Durch längs verlaufende, d. h. in Richtung Z verlaufende Nuten (nicht dargestellt) in der Oberfläche der einzelnen Elemente 5 aber auch der Elemente 6 wird der Transport der Flüssigkeit innerhalb des rohrförmigen Guts 1 verbessert. Dadurch ist eine effektive Schmierung und Kühlung des rohrförmigen Guts 1 und der einzelnen Elemente 5, 6 möglich.

Die flexible Anbindung der Mittel zum Leiten des magnetischen Flusses und auch flexible Verbindung der einzelnen Elemente 5, 6 untereinander hat insbesondere den Vorteil, dass das Einführen der Mittel zum Leiten des magnetischen Flusses in die Vorrichtung beziehungsweise in das Gut 1 einfacher durchgeführt werden kann. Die einzelnen Elemente, die vorzugsweise auch lösbar miteinander verbunden sind, können so nacheinander in das Gut 1 beziehungsweise die Vorrichtung eingeführt werden. Die Handhabung ist dabei deutlich einfacher als die Verwendung eines starren massiven Mittels zum Leiten des elektrischen Flusses, wie es beispielsweise aus der Druckschrift US 3,911,706 bekannt ist. Des Weiteren hat die flexible Verbindung und die Unterteilung der Mittel zum Leiten des elektrischen Flusses in einzelne Elemente den weiteren Vorteil, dass gegebenenfalls gebogene Güter ohne vorheriges Richten mit der erfindungsgemäßen Vorrichtung trotz ihrer Biegeradien verarbeitet werden können.

Für die nicht dargestellten Spulen der Spulenpakete der Module 4 der Induktoren 9 sind Hohlleiter verwendet worden. Durch diese Hohlleiter wird während der Erzeugung der elektromagnetischen Felder ein Schmiermittel gepumpt, welches die Spulen während des Betriebs der Vorrichtung kühlt. Durch das Kühlen der Hohlleiter können höhere Stromdichten in den Hohlleitern und damit in den Wicklungen der Spulen erreicht werden, welches die Erzeugung von starken elektromagnetischen Feldern begünstigt. Durch starke elektromagnetische Felder können wiederum stärkere Zugbeziehungsweise Druckkräfte zum Durchziehen oder Durchdrücken des Guts 1 erreicht werden.

Durch die Verwendung eines Ziehantriebs auf der Seite hinter den Ziehwerkzeugen 2, 3 ist es möglich, ein schnelleres Ziehen auch und insbesondere von aufwickelbaren rohrförmigen Ziehgütern 1 zu erreichen. Dazu kann hinter dem Ziehantrieb ein Wickler angeordnet sein, die einen eigenen Antrieb aufweist, auf welcher das Ziehgut aufgewickelt werden kann. Anders als bei einer Trommelziehmaschine wird der Antrieb des Wicklers jedoch nicht als Ziehantrieb genutzt.

## Patentansprüche

1. Vorrichtung zum Umformen von rohrförmigen elektrisch leitenden und/oder magnetisierbaren Gütern (1), insbesondere zum Durchziehen oder Durchdrücken, umfassend folgende Merkmale:
- die Vorrichtung weist zumindest einen Induktor (9) auf, der geeignet ist ein elektromagnetisches Wanderfeld zu erzeugen;
- der Induktor umfasst axial nebeneinander angeordnete Spulen, die einen Kanal ausbilden;
- durch das elektromagnetische Wanderfeld ist in einem in den Kanal einführbaren rohrförmigen Gut (1) ein elektromagnetisches Feld induzierbar, das dem vom lnduktor (9) induzierten elektromagnetischen Wanderfeld entgegenwirkt und eine Bewegung des rohrförmigen Guts (11) bewirkt;
- die Vorrichtung umfasst zumindest ein Mittel (5, 6, 7, 8) zum Leiten eines magnetischen Flusses, das in dem Kanal herausnehmbar angeordnet ist;
**dadurch gekennzeichnet, dass** das Mittel (5, 6, 7, 8) zum Leiten des magnetischen Flusses mehrere, hintereinander angeordnete Elemente (5, 6) umfasst.

2. Vorrichtung nach Anspruch 1, **dadurch gekennzeichnet, dass** die Elemente (5, 6) über erste flexible Verbindungselemente (7) miteinander verbunden sind.

3. Vorrichtung nach Anspruch 1 oder 2, **dadurch gekennzeichnet, dass** der Induktor (9) aus einem oder mehreren Modulen (4) aufgebaut ist.

4. Vorrichtung nach Anspruch 3, **dadurch gekennzeichnet, dass** die Module (4) aus zumindest zwei Spulenpaketen aufgebaut sind.

5. Vorrichtung nach Anspruch 4, **dadurch gekennzeichnet, dass** die Elemente (5, 6) eine Länge haben, die der Länge eines Spulenpakets entspricht.

6. Vorrichtung nach einem der Ansprüche 1 bis 5, **dadurch gekennzeichnet, dass** die Elemente (5, 6) zumindest teilweise aus verfestigtem Pulvermetall bestehen.

7. Vorrichtung nach einem der Ansprüche 1 bis 5, **dadurch gekennzeichnet, dass** die Elemente (5, 6) zumindest teilweise aus in eine Hülle eingefüllten Pulvermetall bestehen.

8. Vorrichtung nach Anspruch 7, **dadurch gekennzeichnet, dass** die Hülle eine flexible Hülle, zum Beispiel ein Beutel ist.

9. Vorrichtung nach Anspruch 2,
**dadurch gekennzeichnet, dass** die Vorrichtung einen Ziehdorn (3) aufweist, mit welchem das Mittel zum Leiten (5, 6) des magnetischen Flusses über ein zweites Verbindungsmittel (8) verbunden ist.

10. Vorrichtung nach Anspruch 9, **dadurch gekennzeichnet, dass** ein erstes Element der Elemente des Mittels (5, 6, 7, 8) zum Leiten des magnetischen Flusses mit dem Ziehdorn (3) verbunden ist.

11. Vorrichtung nach Anspruch 9 oder 10, **dadurch gekennzeichnet, dass** das zweite Verbindungselement (8) ein flexibles Verbindungselement ist.

12. Vorrichtung nach einem der Ansprüche 2 bis 11, **dadurch gekennzeichnet, dass** die ersten Verbindungselemente (7) und/oder die zweiten Verbindungselemente (8) Seile sind.

13. Verfahren zum Umformen von rohrförmigen Gütern (1) mit einer Vorrichtung nach einem der Ansprüche 1 bis 12, **dadurch gekennzeichnet, dass** in das rohrförmige Gut insbesondere vor die Umformwerkzeuge (3, 4) eine Flüssigkeit eingebracht ist, dass die Flüssigkeit auch Spalte zwischen den Elementen (5, 6) des Mittels zum Leiten des magnetischen Flusses (5, 6, 7, 8) und einer inneren Wandung des rohrförmigen Guts (1) ausfüllt und dass durch eine Bewegung des Guts (1) relativ zu den Elementen (5, 6) in einem Bereich vor dem Werkzeug und/oder zwischen den Elementen ein Druck aufgebaut wird.

## Claims

1. Apparatus for forming tubular electrically conductive and/or magnetizable materials (1), in particular for drawing and extruding, comprising the following features:
- the apparatus has at least one inductor (9) which is suitable for producing a travelling electromagnetic field;
- the inductor comprises coils which are arranged axially next to one another and form a channel;
- an electromagnetic field can be induced in a tubular material (1), which can be inserted into the channel, by the travelling electromagnetic field, the said electromagnetic field counteracting the travelling electromagnetic field which is induced by the inductor (9) and causing a movement of the tubular material (11);
- the apparatus comprises at least one means (5, 6, 7, 8) for conducting a magnetic flux, which means is arranged in the channel in a removable manner,
**characterized in that** the means (5, 6, 7, 8) for conducting the magnetic flux comprises a plurality of elements (5, 6) which are arranged one behind the other.

2. Apparatus according to Claim 1, **characterized in that** the elements (5, 6) are connected to one another by means of first flexible connecting elements (7).

3. Apparatus according to Claim 1 or 2, **characterized in that** the inductor (9) is constructed from one or more modules (4).

4. Apparatus according to Claim 3, **characterized in that** the modules (4) are constructed from at least two coil stacks.

5. Apparatus according to Claim 4, **characterized in that** the elements (5, 6) have a length which corresponds to the length of one coil stack.

6. Apparatus according to one of Claims 1 to 5, **characterized in that** the elements (5, 6) at least partially comprise consolidated powder metal.

7. Apparatus according to one of Claims 1 to 5, **characterized in that** the elements (5, 6) at least partially comprise powder metal which is filled into a casing.

8. Apparatus according to Claim 7, **characterized in that** the casing is a flexible casing, for example a bag.

9. Apparatus according to Claim 2, **characterized in that** the apparatus has a drawing mandrel (3) to which the means for conducting (5, 6) the magnetic flux is connected by means of a second connecting means (8).

10. Apparatus according to Claim 9, **characterized in that** a first element of the elements of the means (5, 6, 7, 8) for conducting the magnetic flux is connected to the drawing mandrel (3).

11. Apparatus according to Claim 9 or 10, **characterized in that** the second connecting element (8) is a flexible connecting element.

12. Apparatus according to one of Claims 2 to 11, **characterized in that** the first connecting elements (7) and/or the second connecting elements (8) are cables.

13. Method for forming tubular materials (1) using an apparatus according to one of Claims 1 to 12, **characterized in that** a liquid is introduced into the tubular material, in particular upstream of the forming tools (3, 4), **in that** the liquid also fills gaps between the elements (5, 6) of the means for conducting the magnetic flux (5, 6, 7, 8) and an inner wall of the tubular material (1), and **in that** a pressure is built up in a region upstream of the tool and/or between the elements on account of a movement of the material (1) relative to the elements (5, 6).

## Revendications

1. Dispositif de formage d'articles (1) tubulaires électriquement conducteurs et/ou pouvant être magnétisés, notamment pour le formage par étirage ou le formage par traction-compression, comprenant les caractéristiques suivantes:
- le dispositif présente au moins un inducteur (9), qui est approprié pour générer un champ d'onde progressive électromagnétique ;
- l'inducteur comprend des bobines disposées côte à côte axialement, qui forment un canal ;
- par l'intermédiaire du champ d'onde progressive électromagnétique, un champ électromagnétique peut être induit dans un article (1) tubulaire pouvant être introduit dans le canal, qui contrebalance le champ d'onde progressive électromagnétique induite par l'inducteur (9) et provoque un mouvement de l'article tubulaire (11) ;
- le dispositif comprend au moins un moyen (5, 6, 7, 8) de conduction d'un flux magnétique, qui est disposé de manière amovible dans le canal ;
**caractérisé en ce que** le moyen (5, 6, 7, 8) de conduction du flux magnétique comprend plusieurs éléments (5, 6) disposés les uns derrière les autres.

2. Dispositif selon la revendication 1, **caractérisé en ce que** les éléments (5, 6) sont reliés les uns aux autres par l'intermédiaire de premiers éléments de liaison flexibles (7).

3. Dispositif selon la revendication 1 ou 2, **caractérisé en ce que** l'inducteur (9) est composé d'un ou plusieurs modules (4).

4. Dispositif selon la revendication 3, **caractérisé en ce que** les modules (4) sont composés d'au moins deux paquets de bobines.

5. Dispositif selon la revendication 4, **caractérisé en ce que** les éléments (5, 6) ont une longueur qui correspond à la longueur d'un paquet de bobines.

6. Dispositif selon une des revendications 1 à 5, **caractérisé en ce que** les éléments (5, 6) sont constitués au moins partiellement de poudre métallique solidifiée.

7. Dispositif selon une des revendications 1 à 5, **caractérisé en ce que** les éléments (5, 6) sont constitués au moins partiellement de poudre métallique versée dans une enveloppe.

8. Dispositif selon la revendication 7, **caractérisé en ce que** l'enveloppe est une enveloppe flexible, par exemple un sachet.

9. Dispositif selon la revendication 2, **caractérisé en ce que** le dispositif présente un mandrin d'étirage (3), avec lequel le moyen de conduction (5, 6) du flux magnétique est relié par l'intermédiaire d'un deuxième moyen de liaison (8).

10. Dispositif selon la revendication 9, **caractérisé en ce qu'**un premier élément des éléments du moyen (5, 6, 7, 8) de conduction du flux magnétique est relié au mandrin d'étirage (3).

11. Dispositif selon la revendication 9 ou 10, **caractérisé en ce que** le deuxième élément de liaison (8) est un élément de liaison flexible.

12. Dispositif selon une des revendications 2 à 11, **caractérisé en ce que** les premiers éléments de liaison (7) et/ou les deuxièmes éléments de liaison (8) sont des câbles.

13. Procédé de formage d'articles tubulaires (1) avec un dispositif selon une des revendications 1 à 12, **caractérisé en ce que** dans l'article tubulaire, notamment avant les outils de formage (3, 4), un liquide est appliqué, **en ce que** le liquide remplit aussi des interstices entre les éléments (5, 6) du moyen de conduction du flux magnétique (5, 6, 7, 8) et une paroi intérieure de l'article tubulaire (1) et **en ce qu'**une pression est établie au moyen d'un mouvement de l'article (1) relativement aux éléments (5, 6) dans une zone avant l'outil et/ou entre les éléments.
